# EUROPEAN PATENT APPLICATION

(11) **EP 4 614 661 A1**
(43) Date of publication of application: **10.09.2025**
(21) Application number: 23912632.9
(22) Date of filing: 04.12.2023
(51) Int. Cl.: H01M 10/42

(54) **BATTERY SYSTEM AND METHOD FOR CONTROLLING CONNECTION BETWEEN BATTERY PACKS USING SAME**

(30) Priority: 28.12.2022 KR 20220186958
(71) Applicant: LG Energy Solution, Ltd., Seoul 07335 (KR)
(72) Inventor: CHOI, Mingyu, Daejeon 34122 (KR)
(74) Representative: Plasseraud IP
(86) International application number: PCT/KR2023/019746
(87) International publication number: WO 2024/143957

(57) **Abstract**

The present disclosure relates to a battery system and method for controlling connection between battery packs using the same. The battery system includes a battery device including a plurality of battery packs; first and second terminals connected to both ends of the battery device; and a battery management system (BMS) that derives a plurality of pack voltages for the plurality of battery packs based on a plurality of voltage measurement signals received from the plurality of battery packs, determines voltages at both ends of the battery device as a first voltage or a second voltage depending on which of the first and second terminals a driving device is connected to, determines whether to connect the plurality of battery packs in parallel or series based on the voltages at both ends of the battery device, and determines which battery packs to be connected in series among the plurality of battery packs based on the plurality of pack voltages when connecting between the plurality of battery packs in series.

## Description

### [Technical Field]

### CROSS-REFERENCE TO RELATED APPLICATION(S)

This application claims priority to and the benefit of Korean Patent Application No. 10-2022-0186958 filed in the Korean Intellectual Property Office on December 28, 2022, the entire contents of which are incorporated herein by reference.

The present disclosure relates to a battery system and a method for controlling connection between battery packs using the same.

### [Background Art]

External systems connected to a battery system may include devices that require a voltage level of 400V for their operation and devices that require a voltage level of 800V for their operation. In order for the battery system to charge and discharge the external system, a pack connection that matches an operating voltage of the device in the external system is required.

A battery system that may be charged and discharged from a device with a voltage level of 800V as the operating voltage is required without connecting a battery pack with 400V as the pack voltage and a battery pack with 800V as the pack voltage.

### [Disclosure]

### [Technical Problem]

The present disclosure attempts to provide a battery system that can be connected to devices with different operating voltages by selecting a series-parallel connection relationship between a plurality of battery packs, in the battery system including a plurality of battery packs with a pack voltage corresponding to 400V, and a method for controlling connection between battery packs using the same.

### [Technical Solution]

According to an aspect of the present disclosure, a battery system includes a battery device including a plurality of battery packs; first and second terminals connected to both ends of the battery device; and a battery management system (BMS) that derives a plurality of pack voltages for the plurality of battery packs based on a plurality of voltage measurement signals received from the plurality of battery packs, determines voltages at both ends of the battery device as a first voltage or a second voltage depending on which of the first and second terminals a driving device is connected to, determines whether to connect the plurality of battery packs in parallel or series based on the voltages at both ends of the battery device, and determines which battery packs to be connected in series among the plurality of battery packs based on the plurality of pack voltages when connecting between the plurality of battery packs in series.

The BMS may CAN communicate with an electronic control unit (ECU) and receive information indicating a discharge level of the battery device as one of the first voltage and the second voltage from the ECU.

When a first driving device driven at a voltage level of the first voltage is connected to the first terminal, or when the information indicating the discharge level of the battery device as the first voltage is received from the ECU, the BMS may determine the voltages at both ends of the battery device as the first voltage, and connect both ends of at least one of the plurality of battery packs to both ends of the battery device.

When a second driving device driven at a voltage level of the second voltage is connected to the second terminal, or when the information indicating the discharge level of the battery device as the second voltage is received from the ECU, the BMS may determine the voltages at both ends of the battery device as the second voltage, determine at least one serial group including two or more battery packs to be connected in series among the plurality of battery packs, and connect both ends of the at least one serial group to both ends of the battery device.

When the number of at least one serial groups is two or more, the BMS may determine the two or more serial groups so that a difference between a sum of a plurality of first pack voltages for a plurality of first battery packs belonging to a first serial group among the two or more serial groups and a sum of a plurality of second pack voltages for a plurality of second battery packs belonging to a second serial group among the two or more serial groups is less than or equal to a predetermined threshold value.

The BMS may generate switch control signals for connecting between battery packs belonging to each of the two or more serial groups in series, for connecting a positive terminal of each of the two or more serial groups to a positive terminal of the battery device, and for connecting a negative terminal of each of the two or more serial groups to a negative terminal of the battery device.

According to another aspect of the present disclosure, a method for connecting between battery packs includes: connecting, by a battery management system (BMS), a battery device including a plurality of battery packs to an external system through one of first and second terminals connected to both ends of the battery device; determining, by the BMS, voltages at both ends of the battery device as a first voltage or a second voltage depending on which of the first and second terminals the driving device is connected to; deriving, by the BMS, a plurality of pack voltages for the plurality of battery packs based on a plurality of voltage measurement signals received from the plurality of battery packs; determining whether to connect the plurality of battery packs in parallel or series based on the voltages at both ends of the battery device; and determining which battery packs to be connected in series among the plurality of battery packs based on the plurality of pack voltages when connecting between the plurality of battery packs in series.

The method may further include: CAN communicating, by the BMS, with an electronic control unit (ECU) and receiving information indicating a discharge level of the battery device as one of the first voltage and the second voltage from the ECU.

The method may further include: when a first driving device driven at a voltage level of the first voltage is connected to the first terminal, or when the information indicating the discharge level of the battery device as the first voltage is received from the ECU, determining the voltages at both ends of the battery device as the first voltage; and connecting both ends of at least one of the plurality of battery packs to both ends of the battery device.

The method may further include: when a second driving device driven at a voltage level of the second voltage is connected to the second terminal, or when the information indicating the discharge level of the battery device as the second voltage is received from the ECU, determining the voltages at both ends of the battery device as the second voltage; determining at least one serial group including two or more battery packs to be connected in series among the plurality of battery packs; and connecting both ends of the at least one serial group to both ends of the battery device.

When the number of at least one serial groups is two or more, the determining of the at least one serial group may further include determining the two or more serial groups so that a difference between a sum of a plurality of first pack voltages for a plurality of first battery packs belonging to a first serial group among the two or more serial groups and a sum of a plurality of second pack voltages for a plurality of second battery packs belonging to a second serial group among the two or more serial groups is less than or equal to a predetermined threshold value.

The method may further include generating, by the BMS, switch control signals for connecting between the battery packs belonging to each of the two or more serial groups in series, for connecting a positive terminal of each of the two or more serial groups to a positive terminal of the battery device, and for connecting a negative terminal of each of the two or more serial groups to a negative terminal of the battery device.

### [Advantageous Effects]

According to the present disclosure, it is possible to efficiently operate a battery system by connecting a plurality of battery packs in parallel when a device that requires a voltage level of 400V for operation is connected, and when a device that requires a voltage level of 800V for operation is connected, connecting a plurality of battery packs in series.

According to the present disclosure, when the battery system is applied to a commercial vehicle, it is possible to use the battery according to the user's desired direction by selecting high output or high capacity according to a cargo load and a driving distance.

According to the present disclosure, it is possible for users of the battery system to charge the battery wherever they want, regardless of 400V charge and 800V charge.

According to the present disclosure, it is possible to reduce a charging speed by charging a 400V battery pack at a charging station that outputs 800V capacity.

According to the present disclosure, an existing 400V battery pack can be converted into 800V and utilized without making a separate 800V battery pack.

### [Description of the Drawings]

FIG. 1 is a block diagram schematically illustrating a battery system according to an embodiment.
FIG. 2 is an example of the battery system of FIG. 1.
FIG. 3 is an example of the battery system including a plurality of serial groups of FIG. 1.
FIG. 4 is a flowchart of a method for controlling connection between battery packs according to an embodiment.

### [Mode for Invention]

Hereafter, embodiments of the present disclosure will be described in detail with reference to the accompanying drawings and the same or similar components are given the same reference numerals and are not repeatedly described. The suffix "module" and/or "unit" for components used in the following description is given or mixed in consideration of only the ease of writing of the specification, and therefore, do not have meanings or roles that distinguish from each other in themselves. Further, when it is determined that a detailed description for the known art related to the present disclosure may obscure the gist of the present disclosure, the detailed description will be omitted. Further, it should be understood that the accompanying drawings are provided only in order to allow exemplary embodiments of the present disclosure to be easily understood, and the spirit of the present disclosure is not limited by the accompanying drawings, but includes all the modifications, equivalents, and substitutions included in the spirit and the scope of the present disclosure.

Terms including an ordinal number such as first, second, etc., may be used to describe various components, but the components are not limited to these terms. The above terms are used solely for the purpose of distinguishing one component from another.

It will be further understood that terms "include" or "have" used in the present specification specify the presence of features, numerals, steps, operations, components, parts mentioned in the present specification, or combinations thereof, but do not preclude the presence or addition of one or more other features, numerals, steps, operations, components, parts, or combinations thereof.

Among the components according to an embodiment, a program implemented as a set of instructions specifying a control algorithm necessary for controlling other components may be installed in a component that controls other components under specific control conditions. The control component may process input data and stored data according to installed programs to generate output data. The control component may include non-volatile memory for storing programs and memory for storing data.

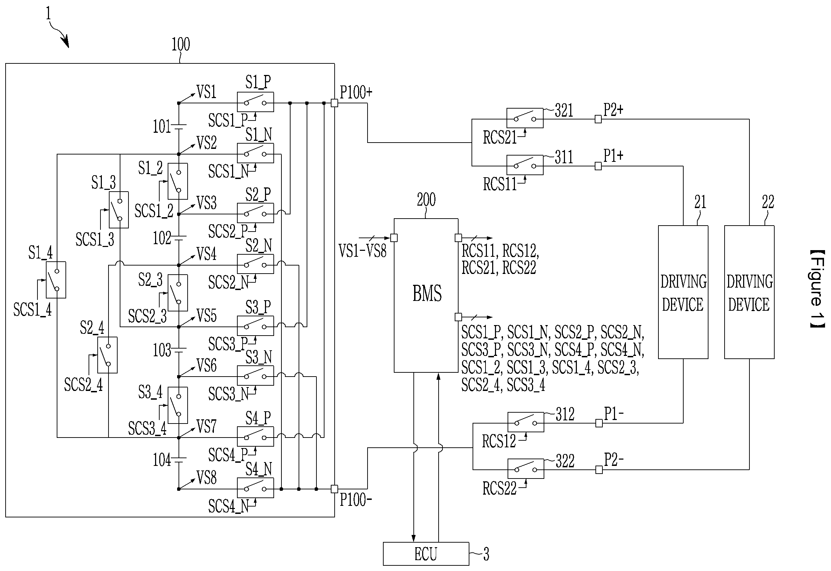

FIG. 1 is a block diagram schematically illustrating a battery system according to an embodiment.

Referring to FIG. 1, a battery system 1 may include a battery device 100, a battery management system (BMS) 200, and a plurality of relays 311, 312, 321, and 322.

The battery device 100 may include a plurality of battery packs 101 to 104 and a plurality of switching elements S1_P, S1_N, S2_P, S2_N, S3_P, S3_N, S4_P, S4_N, S1_2, S1_3, S1_4, S2_3, S2_4, and S3_4. Hereinafter, for convenience of description, among the plurality of switching elements S1_P, S1_N, S2_P, S2_N, S3_P, S3_N, S4_P, S4_N, S1_2, S1_3, S1_4, S2_3, S2_4, and S3_4, switching elements S1_P to S4_P are called positive switching elements, and the switching elements S1_N to S4_N are called negative switching elements, and the switching elements S1_2, S1_3, S1_4, S2_3, S2_4, and S3_4 are called serial switching elements.

Each of the plurality of battery packs 101 to 104 may be implemented as two or more battery cells connected in series, a plurality of battery cells having two or more battery cells connected in parallel, or two or more battery cells connected in parallel.

In FIG. 1, the number of battery packs 101 to 104 is illustrated to be four, but the present disclosure is not limited thereto, and the battery device 100 may include two or more battery packs.

The BMS 200 may receive a plurality of voltage measurement signals VS1 to VS8 from positive and negative electrodes of each of the plurality of battery packs 101 to 104. The BMS 200 may obtain the voltage measurement signal VS1 from the positive electrode of the battery pack 101, and the BMS 200 may obtain the voltage measurement signal VS2 from the negative electrode of the battery pack 101. The BMS 200 may obtain the voltage measurement signal VS3 from the positive electrode of the battery pack 102, and the BMS 200 may obtain the voltage measurement signal VS4 from the negative electrode of the battery pack 102. The BMS 200 may obtain the voltage measurement signal VS5 from the positive electrode of the battery pack 103, and the BMS 200 may obtain the voltage measurement signal VS6 from the negative electrode of the battery pack 103. The BMS 200 may obtain the voltage measurement signal VS7 from the positive electrode of the battery pack 104, and the BMS 200 may obtain the voltage measurement signal VS8 from the negative electrode of the battery pack 104.

The BMS 200 may measure a pack voltage of each of the plurality of battery packs 101 to 104 in an off state of the plurality of positive switching elements S1_P to S4_P and the plurality of negative switching elements S1_N to S4_N. The BMS 200 may transmit off-level switch control signals SCS1_P to SCS4_P and SCS1_N to SCS4_N to the plurality of positive switching elements S1_P to S4_P and the plurality of negative switching elements S1_N to S4_N, and receive the plurality of voltage measurement signals VS1 to VS8.

The BMS 200 may derive the pack voltage of each of the plurality of battery packs 101 to 104 from the plurality of voltage measurement signals VS1 to VS8. The BMS 200 may derive the pack voltage of the battery pack 101 from the voltage measurement signal VS1 and the voltage measurement signal VS2. The BMS 200 may derive the pack voltage of the battery pack 102 from the voltage measurement signal VS3 and the voltage measurement signal VS4. The BMS 200 may derive the pack voltage of the battery pack 103 from the voltage measurement signal VS5 and the voltage measurement signal VS6. The BMS 200 may derive the pack voltage of the battery pack 104 from the voltage measurement signal VS7and the voltage measurement signal VS8.

The BMS 200 may receive battery information indicating current, voltage, temperature, etc., for the plurality of battery packs 101 to 104 from the battery device 100. The BMS 200 may estimate pack capacity of each of the plurality of battery packs 101 to 104 based on the battery information.

One end of the switching element S1_P is connected to a positive terminal of the battery pack 101, and the other end of the switching element S1_P is connected to one end of the relays 311 and 321. One end of the switching element S1_N is connected to a negative terminal of the battery pack 101, and the other end of the switching element S1_N is connected to one end of the relays 312 and 322.

One end of the switching element S2_P is connected to a positive terminal of the battery pack 102, and the other end of the switching element S2_P is connected to one end of the relays 311 and 321. One end of the switching element S2_N is connected to a negative terminal of the battery pack 102, and the other end of the switching element S2_N is connected to one end of the relays 312 and 322.

One end of the switching element S3_P is connected to a positive terminal of the battery pack 103, and the other end of the switching element S3_P is connected to one end of the relays 311 and 321. One end of the switching element S3_N is connected to a negative terminal of the battery pack 103, and the other end of the switching element S3_N is connected to one end of the relays 312 and 322.

One end of the switching element S4_P is connected to a positive terminal of the battery pack 104, and the other end of the switching element S4_P is connected to one end of the relays 311 and 321. One end of the switching element S4_N is connected to a negative terminal of the battery pack 104, and the other end of the switching element S4_N is connected to one end of the relays 312 and 322.

When the plurality of positive switching elements S1_P to S4_P and the plurality of negative switching elements S1_N to S4_N are in an on state, the plurality of battery packs 101 to 104 may be connected in parallel.

The plurality of serial switching elements S1_2, S1_3, S1_4, S2_3, S2_4, and S3_4 may be connected between two battery packs of any combination of the plurality of battery packs 101 to 104 that may be connected in series. For example, when the battery device 100 includes three battery packs, the plurality of serial switching elements may be located between a positive electrode of a first battery pack and a negative electrode of a second battery pack, between a positive electrode of the second battery pack and a negative electrode of a third battery pack, and between the positive electrode of the first battery pack and the negative electrode of the third battery pack.

One end of the switching element S1_2 is connected to the negative electrode of the battery pack 101, and the other end of the switching element S1_2 is connected to the positive electrode of the battery pack 102. When the switching element S1_2 is in an on state, the battery pack 101 and the battery pack 102 may be connected in series.

One end of the switching element S1_3 is connected to the negative electrode of the battery pack 101, and the other end of the switching element S1_3 is connected to the positive electrode of the battery pack 103. When the switching element S1_3 is in an on state, the battery pack 101 and the battery pack 103 may be connected in series.

One end of the switching element S1_4 is connected to the negative electrode of the battery pack 101, and the other end of the switching element S1_4 is connected to the positive electrode of the battery pack 104. When the switching element S1_4 is in an on state, the battery pack 101 and the battery pack 104 may be connected in series.

One end of the switching element S2_3 is connected to the negative electrode of the battery pack 102, and the other end of the switching element S2_3 is connected to the positive electrode of the battery pack 103. When the switching element S2_3 is in an on state, the battery pack 102 and the battery pack 103 may be connected in series.

One end of the switching element S2_4 is connected to the negative electrode of the battery pack 102, and the other end of the switching element S2_4 is connected to the positive electrode of the battery pack 104. When the switching element S2_4 is in an on state, the battery pack 102 and the battery pack 104 may be connected in series.

One end of the switching element S3_4 is connected to the negative electrode of the battery pack 103, and the other end of the switching element S2_4 is connected to the positive electrode of the battery pack 104. When the switching element S3_4 is in an on state, the battery pack 103 and the battery pack 104 may be connected in series.

When at least one of the serial switching elements S1_2, S1_3, S1_4, S2_3, S2_4, and S3_4 is in the on state, the corresponding battery packs among the plurality of battery packs 101 to 104 may be connected in series.

Closing and opening of the plurality of switching elements S1_P to S4_P, S1_N to S4_N, S1_2, S1_3, S1_4, S2_3, S2_4, and S3_4 are controlled according to switch control signals SCS1_P to SCS4_P, SCS1_N to SCS4_N, SCS1_2, SCS1_3, SCS1_4, SCS2_3, SCS2_4, and SCS3_4 supplied from the BMS 200.

One end of each of the plurality of relays 311, 312, 321, and 322 is connected to the battery device 100, and the other end of each of the plurality of relays 311, 312, 321, and 322 is connected to at least one component in an external system. Closing and opening of the plurality of relays 311, 312, 321, and 322 may be controlled according to relay control signals RCS11, RCS12, RCS21, and RCS22 supplied from the BMS 200.

The battery system 1 may be connected to the external system. The external system may be a first driving device 21 or a second driving device 22.

A power supply voltage level required for an operation of the first driving device 21 may be a voltage level of a first voltage V1. A power supply voltage level required for an operation of the second driving device 22 may be a voltage level of a second voltage V2. The second voltage V2 may be at a higher level than the first voltage V1. For example, the first voltage V1 may be 400V and the second voltage V2 may be 800V.

The pack voltage of each of the plurality of battery packs 101 to 104 may be a voltage level within a predetermined range based on the first voltage V1.

Each of the first driving device 21 and the second driving device 22 may include at least one of a power conversion device connected to a charger and a load such as an inverter or a converter. In FIG. 1, each of the first and second driving devices 21 and 22 is illustrated as one, but the present disclosure is not limited thereto. The first and second driving devices 21 and 22 may be one or more driving devices.

When the relay 311 and relay 312 are in an on state, the battery system 1 may be connected to the first driving device 21 through first terminals P1+ and P1-. The battery system 1 may perform a charging or discharging operation during a period when the relay 311 and the relay 312 are in the on state.

When the first driving device 21 is the power conversion device connected to the charger, the first terminals P1+ and P1- of the battery system 1 may be connected to the power conversion device during the period when the relay 311 and the relay 312 are in the on state to receive power from the charger, so the first terminals P1+ and P1- of the battery system 1 may be charged. When the first driving device 21 is the load, the first terminals P1+ and P1- of the battery system 1 may be connected to the load during the period when the relay 311 and the relay 312 are in the on state to discharge power supplied by at least one of the packs 101 to 104 through the load.

When the relay 321 and relay 322 are in an on state, the battery system 1 may be connected to the second driving device 22 through second terminals P2+ and P2-. The battery system 1 may perform the charging or discharging operation during the period when the relay 321 and the relay 322 are in the on state.

When the second driving device 22 is the power conversion device connected to the charger, the second terminals P2+ and P2- of the battery system 1 may be connected to the power conversion device during the period when the relay 321 and the relay 322 are in the on state to receive the power from the charger, so the second terminals P2+ and P2- of the battery system 1 may be charged. When the second driving device 22 is the load, the second terminals P2+ and P2- of the battery system 1 may be connected to the load during the period when the relay 321 and the relay 322 are in the on state to discharge the power supplied by at least one of the packs 101 to 104 through the load.

A device controlling driving of a vehicle, for example, an electronic control unit (ECU) 3, may receive a battery status signal (BSS) transmitted from the BMS 200, and transmit information input from a user of the vehicle to the BMS 200. In this case, the ECU 3 and the BMS 200 may transmit and receive necessary information through CAN communication. The information input from the user of the vehicle may include a signal indicating a discharge level of the battery device 100 as one of the first voltage V1 and the second voltage V2 according to a user's selection.

The BMS 200 may pre-store information indicating rated voltages of the first terminals P1+ and P1- to which the first driving device 21 is connected and rated voltages of the second terminals P2+ and P2- to which the second driving device 22 is connected. Alternatively, the BMS 200 may receive the information indicating the rated voltages of the first terminals P1+ and P1- and the rated voltages of the second terminals P2+ and P2- from the ECU 3 of the vehicle. The BMS 200 may receive information on whether the driving device is connected to each of the first terminals P1+ and P1- and the second terminals P2+ and P2-from the ECU 3. Alternatively, the BMS 200 may be electrically connected to each of the first terminals P1+ and P1- and the second terminals P2+ and P2- to detect that the driving device is connected to each terminal. The BMS 200 may be implemented in various ways to detect that the driving device is connected to each terminal, and if necessary, a separate circuit may be provided to determine whether the driving device is connected to each terminal.

The BMS 200 may determine that at least one of the first driving device 21 and the second driving device 22 is connected to the battery system 1. When it is determined to connect the first driving device 21, the BMS 200 may generate the on-level relay control signals RCS11 and RCS12 and transmit the generated on-level relay control signals RCS11 and RCS 12 to the relays 311 and 312. When it is determined to connect the second driving device 22, the BMS 200 may generate on-level relay control signals RCS21 and RCS22 and transmit the generated on-level relay control signals RCS21 and RCS 22 to the relays 321 and 322.

The BMS 200 determines the voltages at both ends P100+ and P100- of the battery device 100 according to the driving device connected to the battery device 100 among the first driving device 21 and the second driving device 22, and when the determined voltages at both ends are the second voltage V2, it is possible to determine which battery packs to be connected in series among the plurality of battery packs 101 to 104 and whether to connect the battery packs connected in series in parallel. Hereinafter, for convenience of description, the battery packs that the BMS 200 has determined to be connected in series among the plurality of battery packs in response to the second voltage V2 are referred to as a serial group.

The BMS 200 may generate the on-level or off-level switch control signals SCS1_P to SCS4_P, SCS1_N to SCS4_N, SCS1_2, SCS1_3, SCS1_4, SCS2_3, SCS2_4, and SCS3_4 according to the determined configuration of the battery packs to be connected in series to control the operations of the switching elements S1_P to S4_P, S1_N to S4_N, S1_2, S1_3, S1_4, S2_3, S2_4, and S3_4. Hereinafter, for convenience of description, the operation of the BMS 200 to control the switching operation of the plurality of switching elements S1_P to S4_P, S1_N to S4_N, S1_2, S1_3, S1_4, S2_3, S2_4, and S3_4 is referred to as a "switching control operation."

The BMS 200 may generate the switch control signal SCS1_P and transmit the generated switch control signal SCS1_P to the switching element S1_P. The BMS 200 may generate the switch control signal SCS2_P and transmit the generated switch control signal SCS2_P to the switching element S2_P. The BMS 200 may generate the switch control signal SCS3_P and transmit the generated switch control signal SCS3_P to the switching element S3_P. The BMS 200 may generate the switch control signal SCS4_P and transmit the generated switch control signal SCS4_P to the switching element S4_P. The BMS 200 may generate the switch control signal SCS1_N and transmit the generated switch control signal SCS1_N to the switching element S1_N. The BMS 200 may generate the switch control signal SCS2_N and transmit the generated switch control signal SCS2_N to the switching element S2_N. The BMS 200 may generate the switch control signal SCS3_N and transmit the generated switch control signal SCS3_N to the switching element S3_N. The BMS 200 may generate the switch control signal SCS4_N and transmit the generated switch control signal SCS4_N to the switching element S4_N.

The BMS 200 may generate the switch control signal SCS1_2 and transmit the generated switch control signal SCS1_2 to the switching element S1_2. The BMS 200 may generate the switch control signal SCS1_3 and transmit the generated switch control signal SCS1_3 to the switching element S1_3. The BMS 200 may generate the switch control signal SCS1_4 and transmit the generated switch control signal SCS1_4 to the switching element S1_4. The BMS 200 may generate the switch control signal SCS2_3 and transmit the generated switch control signal SCS2_3 to the switching element S2_3. The BMS 200 may generate the switch control signal SCS2_4 and transmit the generated switch control signal SCS2_4 to the switching element S2_4. The BMS 200 may generate the switch control signal SCS3_4 and transmit the generated switch control signal SCS3_4 to the switching element S3_4.

When the first driving device 21 or the second driving device 22 is the power conversion device connected to the charger, the BMS 200 may control the switching operation so that the voltages at both ends P100+ and P100- of the battery device 100 correspond to one of the first voltage V1 and the second voltage V2 depending on the terminal to which the driving device is connected among the first terminals P1+ and P1- and the second terminals P2+ and P2-.

When the first driving device 21 or the second driving device 22 is the load, the BMS 200 may control the switching operation based on the information received from the ECU 3 so that the voltages at both ends P100+ and P100- of the battery device 100 correspond to one of the first voltage V1 or the second voltage V2. For example, the user may select the discharge level of the battery device 100 connected to the vehicle from the first voltage V1 and the second voltage V2, and input the selected information to the ECU 3 through the vehicle. The ECU 3 may receive the information indicating that the discharge level of the battery device 100 is the first voltage V1 from the user. In this case, the ECU 3 may transmit information indicating that the first voltage V1 has been selected to the BMS 200.

When the battery device 100 is charged by connecting the first driving device 21 to the first terminal P1+ and P1- or when the discharge level of the battery device 100 selected by the user is the first voltage V1, the BMS 200 may control the switching operation so that the voltages at both ends P100+ and P100-of the battery device 100 correspond to the first voltage V1. Alternatively, even when the discharge level of the battery device 100 is not selected, the BMS 200 may control the switching operation so that the voltages at both ends P100+ and P100- of the battery device 100 correspond to the first voltage V1.

When the battery device 100 is charged by connecting the second driving device 22 to the second terminal P2+ and P2- or when the discharge level of the battery device 100 selected by the user is the second voltage V2, the BMS 200 may control the switching operation so that the voltages at both ends P100+ and P100- of the battery device 100 correspond to the second voltage V2.

The BMS 200 may control the switching operation of the plurality of switching elements S1_P to S4_P, S1_N to S4_N, S1_2, S1_3, S1_4, S2_3, S2_4, and S3_4 based on the pack voltages and/or pack capacity of each of the plurality of battery packs 101 to 104. Alternatively, the BMS 200 may control the switching operation of the plurality of switching elements S1_P to S4_P, S1_N to S4_N, S1_2, S1_3, S1_4, S2_3, S2_4, and S3_4 in response to commands input from the ECU 3. Hereinafter, for convenience of description, it is described that the BMS 200 controls the switching operation of the plurality of switching elements S1_P-S4_P, S1_N-S4_N, S1_2, S1_3, S1_4, S2_3, S2_4, and S3_4 based on the pack voltages of each of the plurality of battery packs 101 to 104.

When the plurality of relays 311 and 312 are turned on and the first driving device 21 is connected to the battery device 100, the BMS 200 may determine the voltages at both ends P100+ and P100- of the battery device 100 as the first voltage V1. This is because the first voltage V1 corresponds to the power level required for the operation of the first driving device 21. Since the pack voltages of each of the plurality of battery packs 101 to 104 are a voltage corresponding to the first voltage V1, the BMS 200 may determine at least one battery pack to be connected to both ends P100+ and P100- of the battery device 100 among the plurality of battery packs 101 to 104.

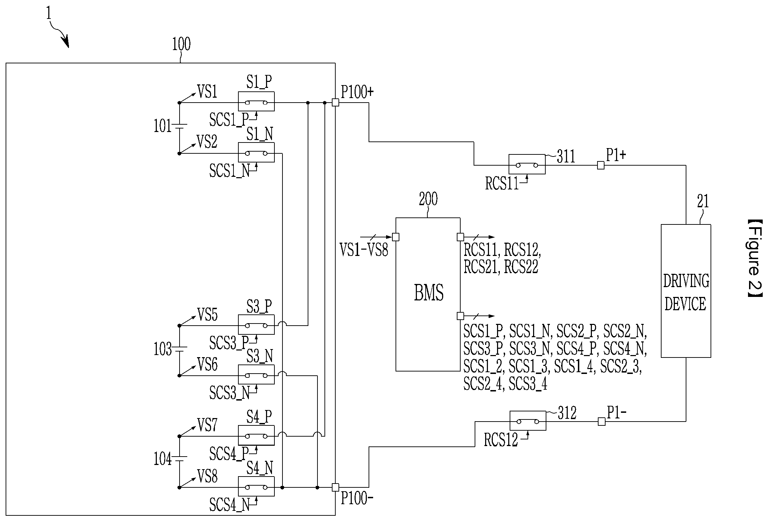

Hereinafter, referring to FIG. 2, the switching control operation in which the BMS 200 causes both ends P100+ and P100- of the battery device 100 to correspond to the first voltage V1 will be described.

FIG. 2 is an example of the battery system of FIG. 1.

The BMS 200 may determine at least one battery pack to be connected to both ends P100+, P100- of the battery device 100 among the plurality of battery packs 101 to 104 based on the pack voltages of each of the plurality of battery packs 101 to 104. The BMS 200 may store a first reference voltage range which is a normal range of the voltages at both ends P100+ and P100- of the battery device 100 in response to the first voltage. The BMS 200 may determine at least one battery pack in which the voltages at both ends P100+ and P100- of the battery device 100 is within the first reference voltage range.

The BMS 200 may connect one battery pack to both ends P100+ and P100- of the battery device 100, or may connect two or more battery packs in parallel.

In the example of FIG. 2, the BMS 200 connects the battery pack 101, the battery pack 103, and the battery pack 104 among the plurality of battery packs 101 to 104 at both ends P100+ and P100- of the battery device 100.

The BMS 200 may turn off the plurality of serial switching elements S1_2, S1_3, S1_4, S2_3, S2_4, and S3_4, and turn on the elements corresponding to the battery pack(s) to be connected to both ends P100+ and P100- of the battery device 100 among the plurality of positive switching elements S1_P to S4_P and the plurality of negative switching elements S1_N to S4_N. In the example of FIG. 2, the BMS 200 may turn off the plurality of serial switching elements S1_2, S1_3, S1_4, S2_3, S2_4, and S3_4, and turn on three positive switching elements S1_P, S3_P, and S4_P and three negative switching elements S1_N, S3_N, and S4_N corresponding to the battery pack 101, battery pack 103, and battery pack 104.

The BMS 200 may generate on-level switch control signals SCS1_P, SCS3_P, SCS4_P, SCS1_N, SCS3_N, and SCS4_N and transmit the generated on-level switch control signals SCS1_P, SCS3_P, SCS4_P, SCS1_N, SCS3_N, and SCS4_N to the plurality of switching elements S1_P, S3_P, S4_P, S1_N, S3_N, and S4_N. Among the plurality of switch control signals SCS1_P to SCS4_P, SCS1_N-SCS4_N, SCS1_2, SCS1_3, SCS1_4, SCS2_3, SCS2_4, and SCS3_4, the remaining signals except the on-level switch control signals SCS1_P, SCS3_P, SCS4_P, SCS1_N, SCS3_N, and SCS4_N may be an off level. Hereinafter, for convenience of description, among the plurality of switch control signals SCS1_P-SCS4_P, SCS1_N-SCS4_N, SCS1_2, SCS1_3, SCS1_4, SCS2_3, SCS2_4, and SCS3_4, the switch control signals other than those specified as the on level are assumed to be an off level.

In FIG. 1, when the plurality of relays 321 and 322 are turned on and the second driving device 22 is connected to the battery device 100, the BMS 200 may determine the voltages at both ends P100+ and P100- of the battery device 100 as the second voltage V2. This is because the second voltage V2 corresponds to the power level required for the operation of the second driving device 22. Since the voltages at both ends of a serial group of two of the plurality of battery packs 101 to 104 connected in series are a voltage corresponding to the second voltage V2, the BMS 200 may determine at least one serial group to be connected to both ends P100+ and P100- of the battery device 100 among the plurality of battery packs 101 to 104. When there are two or more serial groups, the BMS 200 may control the two or more serial groups to be connected in parallel.

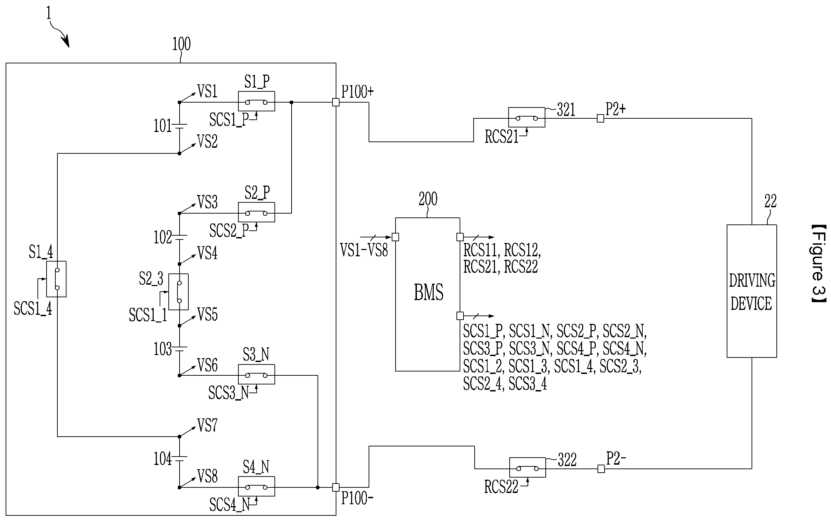

Hereinafter, referring to FIG. 3, the switching control operation in which the BMS 200 causes both ends P100+ and P100- of the battery device 100 to correspond to the first voltage V1 will be described.

FIG. 3 is an example of the battery system including a plurality of serial groups of FIG. 1.

The BMS 200 may determine at least one serial group to be connected to both ends P100+, P100- of the battery device 100 among the plurality of battery packs 101 to 104 based on the pack voltages of each of the plurality of battery packs 101 to 104. The BMS 200 may pre-store a second reference voltage range which is a normal range of the voltages at both ends P100+ and P100- of the battery device 100 in response to the second voltage. The BMS 200 may determine at least one serial group in which the voltages at both ends P100+ and P100- of the battery device 100 is within the second reference voltage range.

The BMS 200 may connect one serial group to both ends P100+ and P100- of the battery device 100, or may connect two or more serial groups in parallel.

In the specification, the number of battery packs belonging to the serial group is described as two, but the present disclosure is not limited thereto. The BMS 200 may determine, as the serial group, the number of battery packs corresponding to the value obtained by dividing the second voltage V2 by the first voltage V1.

The BMS 200 may turn on a switching element connected between two battery packs belonging to a serial group among the plurality of serial switching elements S1_2, S1_3, S1_4, S2_3, S2_4, and S3_4 and turn off the remaining switching elements. The BMS 200 may turn on the switching element connected to the positive terminal P100+ of the battery device 100 among the plurality of positive switching elements S1_P to S4_P and turn off the remaining switching elements. The BMS 200 may turn on the switching element connected to the negative terminal P100- of the battery device 100 among the plurality of negative switching elements S1_N to S4_N and turn off the remaining switching elements.

In order for the BMS 200 to control the switching operation so that the voltages at both ends P100+ and P100- of the battery device 100 corresponds to the second voltage V2, the battery packs belonging to each of at least one serial group may be determined.

Hereinafter, description will be made assuming that the pack voltage of the battery pack 101 is 360V, the pack voltage of the battery pack 102 is 370V, the pack voltage of the battery pack 103 is 380V, and the pack voltage of the battery pack 104 is 390V.

The BMS 200 may derive the voltages at both ends of each of at least one serial group by considering the pack voltage of the battery pack belonging to each of at least one serial group.

When there are two or more serial groups, the BMS 200 should determine a serial group in which a potential difference between the voltages at both ends of one of the two or more serial groups and the voltages at both ends of another one of the two or more serial groups is less than or equal to a predetermined threshold value. For example, the predetermined threshold value may be 20V.

When a voltage difference between two or more serial groups is large, an inrush current may occur during operation when the battery device 100 is connected to the first driving device 21 or the second driving device 22. This is because when the inrush current occurs, shock may occur in the plurality of battery packs 101 to 104 or components within the battery system 1.

Considering the pack voltages of each of the plurality of battery packs 101 to 104, the BMS 200 may determine the battery pack 101 and the battery pack 104 as a first serial group, and determine the battery pack 102 and the battery pack 103 as a second serial group. The voltages at both ends of the first serial group are V=360+390=750(V). The voltages at both ends of the second serial group are V=370+380=750(V).

The BMS 200 may connect the first serial group including the battery pack 101 and the battery pack 104 among the plurality of battery packs 101 to 104, and the second serial group including the battery pack 102 and the battery pack 103 to both ends P100+ and P100- of the battery device 100.

The BMS 200 may generate the on-level switch control signal SCS1_4 and transmit the generated on-level switch control signal SCS1_4 to the switching element S1_4 in order to connect the battery packs 101 and 104 belonging to the first serial group in series. The BMS 200 may generate the on-level switch control signal SCS2_3 and transmit the generated on-level switch control signal SCS2_3 to the switching element S2_3 in order to connect the battery packs 102 and 103 belonging to the second serial group in series. Among the plurality of switch control signals SCS1_2, SCS1_3, SCS1_4, SCS2_3, SCS2_4, and SCS3_4, the switch control signals other than the switch control signal SCS1_4 and the switch control signal SCS2_3 may be at an off level.

The BMS 200 may generate the on-level switch control signals SCS1_P and SCS2_P to connect the positive terminals of the first and second serial groups to the positive terminal P100+ of the battery device 100, and transmit the generated on-level switch control signals SCS1_P and SCS2_P to the switching elements S1_P and S2_P. The BMS 200 may generate the on-level switch control signals SCS3_N and SCS4_N to connect the negative terminals of the first and second serial groups to the negative terminal P100- of the battery device 100, and transmit the generated on-level switch control signals SCS3_N and SCS4_N to the switching elements S3_N and S4_N. Among the plurality of switch control signals SCS1_P-SCS4_P, the remaining switch control signals except for the switch control signals SCS1_P and SCS2_P may be at an off level. Among the plurality of switch control signals SCS1_N to SCS4_N, the remaining switch control signals except for the switch control signals SCS3_N and SCS4_N may be at an off level.

Referring to FIG. 3, the first serial group (a group in which the battery pack 101 and the battery pack 104 are connected in series) and the second serial group (a group in which the battery pack 102 and the battery pack 103 are connected in series) may be connected to both ends P100+ and P100- of the battery device 100 in parallel according to the switching control operation.

The voltages at both ends of the first and second serial groups may correspond to the voltage level of the second voltage V2 required for operation of the second driving device 22.

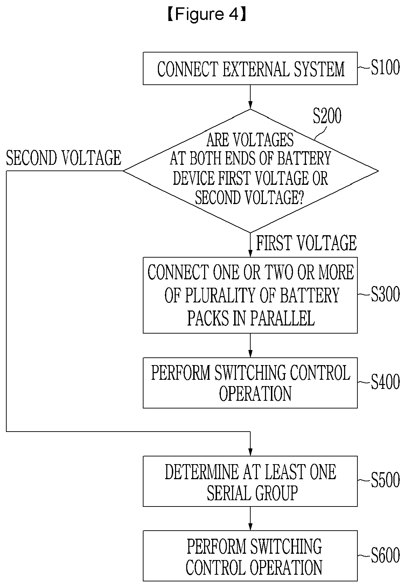

FIG. 4 is a flowchart of a method for controlling connection between battery packs according to an embodiment.

Hereinafter, descriptions that overlap with the above description during the operation of the BMS 200 may be omitted.

The battery system 1 may be connected to the external system of the first driving device 21 or the second driving device 22 (S100). The BMS 200 may connect the battery device 100 to the first driving device 21 or the second driving device 22 through the plurality of relays 311, 312, 321, and 322. The BMS 200 may transmit the on-level relay control signals RCS11 and RCS12 to the relays 311 and 312 to connect the battery device 100 to the first driving device 21 through the terminals P1+ and P1-. Alternatively, the BMS 200 may transmit the on-level relay control signals RCS21 and RCS22 to the relays 321 and 322 to connect the battery device 100 to the second driving device 22 through the terminals P2+ and P2-.

The BMS 200 may determine whether the voltages at both ends P100+ and P100- of the battery device 100 is the first voltage V1 or the second voltage V2 (S200).

When the first driving device 21 or the second driving device 22 is the power conversion device connected to the charger, depending on the terminal to which the driving device is connected among the first terminals P1+ and P1- and the second terminals P2+ and P2-, and when the first driving device 21 or the second driving device 22 is the load, the BMS 200 may determine the voltages at both ends P100+ and P100- of the battery device 100 based on the information received from the ECU 3.

In step S200, when the voltages at both ends P100+ and P100- of the battery device 100 are the first voltage V1, the BMS 200 may connect one or two or more battery packs of the plurality of battery packs 101 to 104 to both ends P100+ and P100- of the battery device 100 in parallel (S300). The BMS 200 may determine at least one battery pack to be connected to both ends P100+, P100- of the battery device 100 based on the pack voltages of each of the plurality of battery packs 101 to 104.

Following step S300, the BMS 200 may perform a switching control operation on a switch corresponding to at least one battery pack determined to be connected to both ends P100+ and P100- of the battery device 100 (S400). In the example of FIG. 2, the BMS 200 may generate the on-level switch control signals SCS1_P, SCS3_P, SCS4_P, SCS1_N, SCS3_N, and SCS4_N and transmit the generated on-level switch control signals SCS1_P, SCS3_P, SCS4_P, SCS1_N, SCS3_N, and SCS4_N to the plurality of switching elements S1_P, S3_P, S4_P, S1_N, S3_N, and S4_N.

When the voltages at both ends P100+ and P100- of the battery device 100 is the second voltage V2 in step S200, the BMS 200 may determine at least one serial group to be connected to both ends P100+ and P100- of the battery device 100 (S500).

The BMS 200 may determine the battery pack belonging to each of at least one serial group among the plurality of battery packs 101 to 104 based on the pack voltages of each of the plurality of battery packs 101 to 104. When there are two or more serial groups, the BMS 200 may determine the battery packs belonging to each of the plurality of serial groups so that the voltage difference between the voltages of both ends of the two or more serial groups is less than or equal to the predetermined threshold value.

Following step S500, the BMS 200 may perform a switching control operation on a switch corresponding to at least one serial group determined to be connected to both ends P100+ and P100- of the battery device 100 (S600). In an example of FIG. 3, the BMS 200 may generate the on-level switch control signals SCS1_4, SCS2_3, SCS1_P, SCS2_P, SCS4_N, and SCS3_N and transmit the generated on-level switch control signals SCS1_4, SCS2_3, SCS1_P, SCS2_P, SCS4_N, and SCS3_N to the plurality of switching elements S1_4, S2_3, S1_P, S2_P, S3_N, and S4_N.

According to one embodiment, the BMS 200 may adjust the voltages at both ends P100+ and P100- of the battery device 100 to a voltage level corresponding to the first voltage V1 or a voltage level corresponding to the second voltage V2. When two or more battery packs among the plurality of battery packs 101 to 104 are connected in series, the battery packs belonging to the plurality of serial groups may be determined so that the voltage difference between the voltages of both ends of the plurality of serial groups is less than or equal to the predetermined threshold value.

Although the embodiments of the present disclosure have been described in detail above, the scope of the present disclosure is not limited thereto, and various modifications and improvements by those of ordinary skill in the field to which the present disclosure pertains belong to the scope of the present disclosure.

## Claims

1. A battery system, comprising:
a battery device including a plurality of battery packs;
first and second terminals connected to both ends of the battery device; and
a battery management system (BMS) that derives a plurality of pack voltages for the plurality of battery packs based on a plurality of voltage measurement signals received from the plurality of battery packs, determines voltages at both ends of the battery device as a first voltage or a second voltage depending on which of the first and second terminals a driving device is connected to, determines whether to connect the plurality of battery packs in parallel or series based on the voltages at both ends of the battery device, and determines which battery packs to be connected in series among the plurality of battery packs based on the plurality of pack voltages when connecting between the plurality of battery packs in series.

2. The battery system of claim 1, wherein:
the BMS
CAN communicates with an electronic control unit (ECU) and receives information indicating a discharge level of the battery device as one of the first voltage and the second voltage from the ECU.

3. The battery system of claim 2, wherein:
when a first driving device driven at a voltage level of the first voltage is connected to the first terminal, or when the information indicating the discharge level of the battery device as the first voltage is received from the ECU,
the BMS
determines the voltages at both ends of the battery device as the first voltage, and connects both ends of at least one of the plurality of battery packs to both ends of the battery device.

4. The battery system of claim 2, wherein:
when a second driving device driven at a voltage level of the second voltage is connected to the second terminal, or when the information indicating the discharge level of the battery device as the second voltage is received from the ECU,
the BMS
determines the voltages at both ends of the battery device as the second voltage, determines at least one serial group including two or more battery packs to be connected in series among the plurality of battery packs, and connects both ends of the at least one serial group to both ends of the battery device.

5. The battery system of claim 4, wherein:
when the number of at least one serial groups is two or more,
the BMS
determines the two or more serial groups so that a difference between a sum of a plurality of first pack voltages for a plurality of first battery packs belonging to a first serial group among the two or more serial groups and a sum of a plurality of second pack voltages for a plurality of second battery packs belonging to a second serial group among the two or more serial groups is less than or equal to a predetermined threshold value.

6. The battery system of claim 5, wherein:
the BMS
generates switch control signals for connecting between battery packs belonging to each of the two or more serial groups in series, for connecting a positive terminal of each of the two or more serial groups to a positive terminal of the battery device, and for connecting a negative terminal of each of the two or more serial groups to a negative terminal of the battery device.

7. A method for connecting between battery packs, comprising:
connecting, by a battery management system (BMS), a battery device including a plurality of battery packs to an external system through one of first and second terminals connected to both ends of the battery device;
determining, by the BMS, voltages at both ends of the battery device as a first voltage or a second voltage depending on which of the first and second terminals the driving device is connected to;
deriving, by the BMS, a plurality of pack voltages for the plurality of battery packs based on a plurality of voltage measurement signals received from the plurality of battery packs;
determining whether to connect the plurality of battery packs in parallel or series based on the voltages at both ends of the battery device; and
determining which battery packs to be connected in series among the plurality of battery packs based on the plurality of pack voltages when connecting between the plurality of battery packs in series.

8. The method of claim 7, further comprising:
CAN communicating, by the BMS, with an electronic control unit (ECU) and receiving information indicating a discharge level of the battery device as one of the first voltage and the second voltage from the ECU.

9. The method of claim 8, further comprising:
when a first driving device driven at a voltage level of the first voltage is connected to the first terminal, or when the information indicating the discharge level of the battery device as the first voltage is received from the ECU,
determining the voltages at both ends of the battery device as the first voltage; and
connecting both ends of at least one of the plurality of battery packs to both ends of the battery device.

10. The method of claim 8, further comprising:
when a second driving device driven at a voltage level of the second voltage is connected to the second terminal, or when the information indicating the discharge level of the battery device as the second voltage is received from the ECU,
determining the voltages at both ends of the battery device as the second voltage;
determining at least one serial group including two or more battery packs to be connected in series among the plurality of battery packs; and
connecting both ends of the at least one serial group to both ends of the battery device.

11. The method of claim 10, wherein:
when the number of at least one serial group is two or more,
the determining of the at least one serial group further includes
determining the two or more serial groups so that a difference between a sum of a plurality of first pack voltages for a plurality of first battery packs belonging to a first serial group among the two or more serial groups and a sum of a plurality of second pack voltages for a plurality of second battery packs belonging to a second serial group among the two or more serial groups is less than or equal to a predetermined threshold value.

12. The method of claim 11, further comprising:
the BMS
generating, by the BMS, switch control signals for connecting between the battery packs belonging to each of the two or more serial groups in series, for connecting a positive terminal of each of the two or more serial groups to a positive terminal of the battery device, and for connecting a negative terminal of each of the two or more serial groups to a negative terminal of the battery device.
